(19) Europäisches Patentamt
European Patent Office
Office européen des brevets

(11) **EP 4 746 093 A1**

(12) **EUROPEAN PATENT APPLICATION**

(43) Date of publication:
**20.05.2026 Bulletin 2026/21**

(21) Application number: **25215749.0**

(22) Date of filing: **13.11.2025**

(51) International Patent Classification (IPC):
**H01M 10/04** (2006.01)   **H01M 10/0587** (2010.01)

(52) Cooperative Patent Classification (CPC):
**H01M 10/0409; H01M 10/0422; H01M 10/0431; H01M 10/0587**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 KR 20240161090**

(71) Applicant: SK On Co., Ltd.
**Seoul 03161 (KR)**

(72) Inventors:
• KIM, Hyeong Won
  34124 Daejeon (KR)
• AN, Oh San
  34124 Daejeon (KR)
• LEE, Yoong Hee
  34124 Daejeon (KR)
• HONG, Hyo Sung
  34124 Daejeon (KR)

(74) Representative: **Stolmár & Partner**
**Patentanwälte PartG mbB**
**Blumenstraße 17**
**80331 München (DE)**

(54) **REFORMING SYSTEM FOR ELECTRODE ASSEMBLY AND METHOD FOR OPERATING THE SAME**

(57)    A reforming system for an electrode assembly and a method for operating the same may be provided, wherein the reforming system includes a reforming apparatus comprising a reform-pin for reforming a separator of the electrode assembly, an imaging device for capturing an image of a region of the electrode assembly, and a controller for controlling the reforming apparatus to perform the reforming of the separator based on the image captured by the imaging device and specification of the reform-pin.

FIG. 5D

[540]        [550]

**Description**

CROSS-REFERENCE TO RELATED APPLICATION

This application claims priority to Korean Patent Application No. 10-2024-0161090 filed November 13, 2024, the disclosure of which is hereby incorporated by reference in its entirety.

BACKGROUND

Technical Field

The embodiments of the present disclosure relate generally to secondary battery technology and more particularly to a reforming system for an electrode assembly and a method for operating the same.

Technical Considerations

A secondary battery is a battery capable of repeated charging and discharging. With the development of the information communication and display industries, secondary batteries are widely used as power sources for portable electronic communication devices such as camcorders, mobile phones, tablet personal computers (PCs), notebook PCs, and the like. Furthermore, recently, battery packs including a plurality of battery modules are being developed for use as power sources for environmentally friendly vehicles such as electric vehicles.

Generally, secondary batteries are classified into cylindrical, prismatic, or pouch types according to the shape of an exterior material (or case) in which an electrode assembly is housed. The electrode assembly may be classified into a jelly-roll type, a stacked type, a folded type, and a stacked-and-folded type according to the stacked structure of a positive electrode, a separator, and a negative electrode.

The jelly-roll type electrode assembly has advantages such as ease of manufacturing and high energy density per weight. The jelly-roll type electrode assembly is manufactured by interposing a separator between a positive electrode, in which a positive active material is coated on an aluminum foil, and a negative electrode, in which a negative active material is coated on a copper foil, and then winding the structure into a cylindrical shape using a winding core. When the winding core is removed after winding, a part of the electrode assembly (e.g., the separator) that was in contact with the winding core may separate and become positioned in the hollow of the electrode assembly. The separator positioned in the hollow of the electrode assembly may interfere with the insertion of a welding rod during a subsequent process and can be a factor that hinders subsequent electrolyte injection. Accordingly, after the winding process is performed, a reforming process is carried out as a post-process to the winding process, in which a reform-pin is inserted into the hollow interior, and the inserted reform-pin is used to bring the separator into close contact with the inner wall of the hollow.

SUMMARY

Embodiments of the present disclosure provide a reforming system for an electrode assembly and a method for operating the same, having improved efficiency for a reforming process of a separator.

Embodiments of the present disclosure provide a reforming system for an electrode assembly and a method for operating the same, having improved reliability related to the quality of a secondary battery.

Problems to be solved through various embodiments are not limited to the above-described problems, and other problems not described above will be clearly understood by those skilled in the art from the following description.

To achieve the above advantages, according to some non-limiting embodiments of the present disclosure, there is provided a reforming system for an electrode assembly, which comprises: a reforming apparatus comprising a reform-pin for reforming a separator of the electrode assembly; an imaging device for capturing an image of a region of the electrode assembly; and a controller for controlling the reforming apparatus to perform reforming the separator based on the image captured by the imaging device and a specification of the reform-pin.

In some non-limiting embodiments or aspects, the controller checks an insertion position of the reform-pin based on the image captured by the imaging device; determines whether interference between the separator and the reform-pin occurs based on the specification of the reform-pin; and controls the reforming apparatus to perform the reforming of the separator when it is determined that the interference will not occur.

In some non-limiting embodiments or aspects, the controller controls the reforming apparatus to perform a rework process for the separator when it is determined that the interference will occur.

In some non-limiting embodiments or aspects, the controller recognizes an insertion region for the reform-pin from the image captured by the imaging device; extracts the insertion position for the reform-pin from the recognized insertion region; determines whether interference between the reform-pin and the separator occurs based on the insertion position and the specification of the reform-pin; and controls the reforming apparatus to perform the reforming of the separator using the reform-pin when it is determined that the interference will not occur.

In some non-limiting embodiments or aspects, the controller transmits the insertion position to the reforming apparatus, and the reforming apparatus aligns the reform-pin based on the insertion position; inserts the reform-pin into the insertion region; and performs reforming the separator by pressing the separator against an inner wall of the electrode assembly using the inserted reform-pin.

In some non-limiting embodiments or aspects, the reforming system further comprises a transport apparatus that transports the electrode assembly, and the controller transmits the insertion position to the transport apparatus, wherein the transport apparatus aligns a position of the transport apparatus with the reform-pin based on the insertion position, and the reforming apparatus inserts the reform-pin into the insertion region; and performs reforming the separator by pressing the separator against an inner wall of the electrode assembly using the inserted reform-pin.

In some non-limiting embodiments or aspects, the controller recognizes a hollow region of the electrode assembly from the image; divides the hollow region into two regions based on the separator; and determines a wider region of the two divided regions as the insertion region.

In some non-limiting embodiments or aspects, the controller calculates a center of gravity of the insertion region; and determines the calculated center of gravity as the insertion position.

In some non-limiting embodiments or aspects, the controller calculates a minimum distance between the center of gravity and a boundary line of the insertion region; checks whether the calculated minimum distance is greater than or equal to a radius of the reform-pin; determines that the interference will not occur when the calculated minimum distance is greater than or equal to the radius of the reform-pin; and determines that the interference will occur when the calculated minimum distance is less than the radius of the reform-pin.

In some non-limiting embodiments or aspects, the controller calculates a minimum distance between the center of a gravity and a boundary line of the insertion region; checks whether the calculated minimum distance is greater than or equal to a distance obtained by adding a specified margin to a radius of the reform-pin; determines that the interference will not occur when the calculated minimum distance is greater than or equal to the distance obtained by adding the margin to the radius of the reform-pin; and determines that the interference will occur when the calculated minimum distance is less than the distance obtained by adding the margin to the radius of the reform-pin.

To achieve the above advantages, according to some non-limiting embodiments of the present disclosure, there is provided a method for operating a reforming system for an electrode assembly, which comprises the steps of: capturing, via an imaging device of the reforming system, an image of a region of the electrode assembly; and controlling, based on the captured image and specification of a reform-pin included in a reforming apparatus of the reforming system, the reforming apparatus to perform reforming a separator of the electrode assembly.

In some non-limiting embodiments or aspects, the step of controlling the reforming apparatus to perform the reforming of the separator comprises: checking an insertion position of the reform-pin based on the captured image; determining whether interference between the separator and the reform-pin occurs based on the specification of the reform-pin; and controlling the reforming apparatus to perform reforming the separator when it is determined that the interference will not occur.

In some non-limiting embodiments or aspects, the method further comprises controlling the reforming apparatus to perform a rework process for the separator when it is determined that the interference will occur.

In some non-limiting embodiments or aspects, the step of controlling the reforming apparatus comprises: recognizing an insertion region for the reform-pin from the captured image; extracting the insertion position for the reform-pin from the recognized insertion region; determining whether interference between the reform-pin and the separator occurs based on the insertion position and the specification of the reform-pin; and controlling the reforming apparatus to perform reforming the separator using the reform-pin when it is determined that the interference will not occur.

In some non-limiting embodiments or aspects, the step of controlling the reforming apparatus to perform reforming the separator comprises: a controller of the reforming system transmitting the insertion position to the reforming apparatus; and the reforming apparatus, in response to receiving the insertion position from the controller: aligning the reform-pin based on the insertion position; inserting the reform-pin into the insertion region; and pressing the separator against an inner wall of the electrode assembly using the inserted reform-pin.

In some non-limiting embodiments or aspects, the step of controlling the reforming apparatus to perform reforming the separator comprises: a controller of the reforming system transmitting the insertion position to a transport apparatus of the reforming system that transpoits the electrode assembly; the transport apparatus, in response to receiving the insertion position from the controller, aligning a position of the electrode assembly based on the insertion position, and transmitting a signal indicating completion of the alignment of the position of the electrode assembly to the reforming apparatus or the controller; and the reforming apparatus, in response to receiving the signal indicating completion of the alignment, inserting the reform-pin into the insertion region, and pressing the separator against an inner wall of the electrode assembly using the inserted reform-pin.

In some non-limiting embodiments or aspects, the step of recognizing an insertion region for the reform-pin from the captured image comprises: recognizing a hollow region of the electrode assembly from the captured image; dividing the hollow region into two regions based on the separator; and determining the wider region of the two divided regions as the insertion region.

In some non-limiting embodiments or aspects, the step of extracting the insertion position comprises: calculating a center of gravity of the insertion region; and determining the calculated center of gravity as the insertion position.

In some non-limiting embodiments or aspects, the step of determining whether interference occurs comprises: calculating a minimum distance between the center of gravity and a boundary line of the insertion region; and determining that the interference will not occur if the calculated minimum distance is greater than or equal to a distance obtained by adding a specified margin to a radius of the reform-pin, and that the interference will occur if the calculated minimum distance is less than the distance obtained by adding the margin to the reform-pin.

To achieve the above advantages, according to some non-limiting embodiments of the present disclosure, there is provided a reforming system for reforming a separator of an electrode assembly, comprising: a reforming apparatus configured to hold a reform-pin; an imaging device configured to capture an image of a top and/or a bottom surface of the electrode assembly; and a controller configured to control the reforming apparatus to perform reforming the separator based on the captured image and a specification of the reform-pin, wherein the controller is configured to recognize a hollow region of the electrode assembly from the captured image, to determine two divided regions of the hollow region based on a position of the separator, to determine one of the two divided regions as a wider region, and to define the wider divided region as the insertion region.

In some non-limiting embodiments, interference between the reform-pin and the separator can be prevented (or avoided). Consequently, the embodiments of the present disclosure can prevent or minimize the occurrence of defects due to damage to the separator, thereby improving the productivity and/or the reliability related to the quality of secondary batteries.

In some non-limiting embodiments, the embodiments of the present disclosure can dynamically adjust the insertion position of the reform-pin according to the shape of the separator. The embodiments can minimize the set-up time of the reforming system and improve the operating rate (e.g., enhance Overall Equipment Effectiveness (OEE)).

These and other features and characteristics of the embodiments of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and may not limit the subject matter of the present disclosure.

BRIEF DESCRIPTION OF THE DRAWINGS

The above and other objects, features and other advantages of the embodiments of the present disclosure will be more clearly understood from the following detailed description taken in conjunction with the accompanying drawings, in which:

FIG. 1 is a diagram illustrating a reforming system for an electrode assembly according to some non-limiting embodiments of the present disclosure.
FIG. 2 is a diagram illustrating a reforming system for an electrode assembly according to some non-limiting embodiments of the present disclosure.
FIG. 3 is a flowchart illustrating a method for operating the reforming system according to some non-limiting embodiments of the present disclosure.
FIG. 4A is a flowchart illustrating in more detail the operation of recognizing the insertion region of FIG. 3.
FIG. 4B is a flowchart illustrating in more detail the operation of extracting the insertion position of FIG. 3.
FIG. 4C is a flowchart illustrating in more detail the operation of determining whether interference occurs between the reform-pin and the separator of FIG. 3.
FIG. 4D is a flowchart illustrating in more detail the operation of performing the reforming of the separator of FIG. 3.
FIG. 5A is a diagram illustrating an image captured of a bottom surface of the electrode assembly according to some non-limiting embodiments of the present disclosure.
FIG. 5B is a diagram illustrating a method for determining the insertion region according to some non-limiting embodiments of the present disclosure.
FIG. 5C is a diagram illustrating a method for determining the insertion position according to some non-limiting embodiments of the present disclosure.
FIG. 5D is a diagram illustrating a method for reforming the separator using the reform-pin according to some non-limiting embodiments of the present disclosure.
FIG. 6 is a block diagram illustrating a configuration of a controller according to some non-limiting embodiments of the present disclosure.

## DETAILED DESCRIPTION

Hereinafter, embodiments of the present disclosure will be described in detail with reference to the accompanying drawings. However, since various changes may be made in the embodiments, the scope of the present disclosure is not limited or restricted by these embodiments. It should be understood that all modifications, equivalents, and alternatives for the embodiments are included in the scope of the present disclosure. For example, it is to be understood that the embodiments of the present disclosure include various alternative variations and step sequences, except where expressly specified to the contrary. It is also to be understood that the specific devices and processes illustrated in the attached drawings, and described in the following detailed description, are simply illustrative and describe non-limiting embodiments of the disclosed subject matter. Hence, specific dimensions and other physical characteristics related to the embodiments disclosed herein are not to be considered as limiting.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "comprise", "comprises", "comprising", "include" , "includes", "including", "has," "have," "having," or the like are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments, refer to a condition for automatically triggering an action (e.g., a specific operation of an electronic device, such as a computing device, a processor, and/or the like).

It will be understood that when a component is described to as being "connected," "combined" or "coupled" to another component, the component may be directly connected or coupled to the another component, or it may be "connected," "combined" or "coupled" to the other component by an intervening other component that may be present.

Further, in describing the components of the embodiment, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment and components comprising common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of "information". Here, the information may be used as a concept comprising the data.

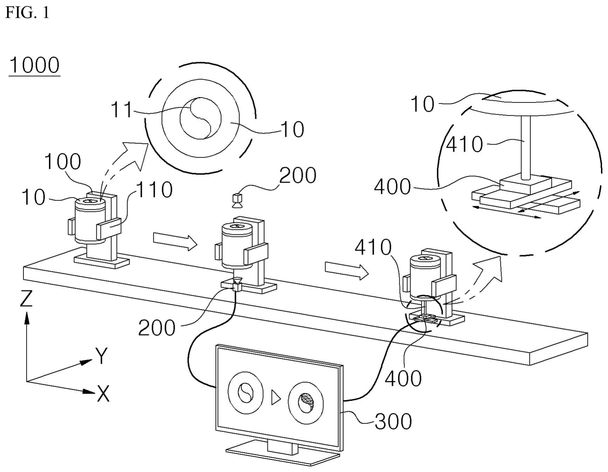

FIG. 1 is a diagram illustrating a reforming system for an electrode assembly according to some non-limiting embodiments of the present disclosure.

Referring to FIG. 1, the reforming system 1000 for an electrode assembly according to some non-limiting embodiments may include a transport apparatus 100, an imaging device 200, a controller 300, and a reforming apparatus 400.

The transport apparatus 100 may transport the electrode assembly 10 for manufacturing a secondary battery (not shown). For example, the transport apparatus 100 may grip an outer wall of the electrode assembly 10 with a gripper 110 and transport the electrode assembly 10 along a manufacturing line, although the embodiments are not limited thereto. The electrode assembly 10 may be formed by a winding process, wherein a separator is interposed between a positive electrode (having a positive active material coated on an aluminum foil) and a negative electrode (having a negative active material coated on a copper foil), the resulting structure is wound into a cylindrical shape using a winding core, and the winding core is subsequently removed. In this case, as illustrated in the cross-sectional view of the electrode assembly 10 of FIG. 1, the electrode assembly 10 has a hollow formed in a central portion thereof, and a separator portion 11 may be spaced apart from an inner wall of the electrode assembly 10 and located within the hollow.

The imaging device 200 may be a camera that captures an image of a subject. According to some non-limiting embodiments, the imaging device 200 may capture an image of a region of the electrode assembly 10, e.g., a region into which the reform-pin 410 of the reforming apparatus 400 is inserted. For example, the imaging device 200 may capture images of a top surface and a bottom surface of the electrode assembly 10. For example, the imaging device 200 may include two cameras, each one configured to be positioned respectively located over a top and a bottom surface of the electrode assembly 10. In another embodiment, the imaging device 200 may capture an image of only the bottom surface of the electrode assembly 10. That is, the imaging device 200 may include only one camera located below the bottom surface of the electrode assembly 10.

Although FIG. 1 illustrates the imaging device 200 positioned spaced apart from the bottom and top surfaces of the electrode assembly, i.e., in space without a separate connection structure (or connection device) for simplicity of illustration, it will be apparent to those skilled in the art that the imaging device 200 would actually be connected to a separate support structure. Furthermore, it will also be apparent to those skilled in the art that the imaging device 200 may be operationally connected to the controller 300. For example, the connection may be by wire as illustrated in FIG. 1. However, the connection may also be a wireless connection. Moreover, the imaging device located over the top of the electrode assembly 10 may be directly connected to the controller 300, or may be indirectly connected to the controller 300, for example via the imaging device 200 located at the bottom. Furthermore, it will also be apparent to those skilled in the art that the imaging device 200 located below the bottom of the electrode assembly 10 may be directly connected to the controller 300, or may be indirectly connected to the controller 300 via the imaging device 200 located at the bottom. The connection may be wireless or via wire.

The controller 300 may control the reforming process. For example, the controller 300 may control the reforming apparatus 400 to perform the reforming of the separator 11 of the electrode assembly 10 based on the image captured by the imaging device 200 and specification of the reform-pin 410. For example, the specification of the reform pin may include the following parameters: diameter, cross-sectional shape, cross-sectional area, and the like. Specifically, the controller 300 may check (extract or recognize) the insertion position of the reform-pin 410 based on the image captured by the imaging device 200, and determine whether interference between the separator 11 and the reform-pin 410 may occur based on the specification of the reform-pin 410. When it is determined, based on the interference determination, that the interference will not occur, the controller 300 may control the reforming apparatus 400 to perform the reforming of the separator 11. More specifically, the controller 300 may obtain (e.g., receive) an image (e.g., an image capturing the bottom surface and/or the top surface of the electrode assembly 10) from the imaging device 200, analyze the obtained image to recognize an insertion region for the reform-pin 410 from the image, extract the insertion position for the reform-pin 410 from the recognized insertion region, and determine whether interference between the reform-pin 410 and the separator 11 may occur based on the insertion position and the specification of the reform-pin 410. When it is determined that interference will not occur, the controller 300 may then control the reforming apparatus 400 to perform the reforming of the separator 11 using the reform-pin 410.

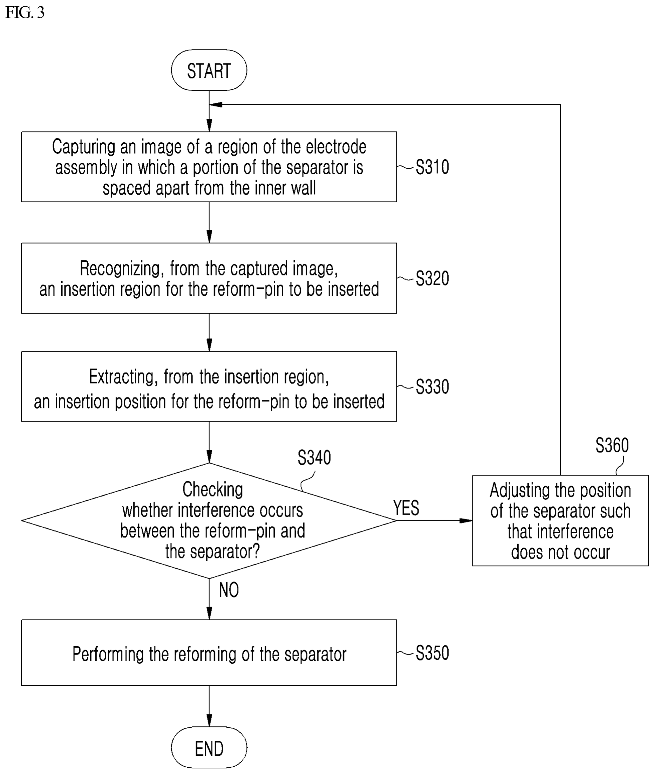

When the controller 300 determines that interference between the reform-pin 410 and the separator 11 will occur, it may control performance of a rework process for the separator 11. For example, to proceed with the rework process for adjusting the position of the separator 11, the controller 300 may control the transport apparatus 100 to move the electrode assembly 10 to a designated location. Then, an operator or a rework apparatus (not shown) may adjust the position of the separator 11 such that interference with the reform-pin 410 does not occur. The controller 300 may be a computing device or a server. A detailed description of the operation of the controller 300 will be provided later with reference to FIGS. 3 to 5D.

The reforming apparatus 400 is designed to precisely position and insert the reform-pin 410 to reshape the separator 11 within the electrode assembly 10 without causing interference. The reforming apparatus 400 may include the reform-pin 410 for reforming the separator 11 of the electrode assembly 10. For example, the reforming apparatus 400, using the reform-pin 410, may press the separator 11, which is spaced apart from the inner wall of the electrode assembly 10 and located in the hollow thereof, against the inner wall. According to some non-limiting embodiments, the reforming apparatus 400, based on the insertion position determined (or inferred) by the controller 300 (e.g., a position where interference between the reform-pin 410 and the separator 11 does not occur), may move the reform-pin 410 in a horizontal direction (X direction) and a longitudinal direction (Y direction), move (e.g., raise) the reform-pin 410 in a vertical direction (Z-axis direction) to insert the reform-pin 410 into the hollow of the electrode assembly 10, and reform the separator 11 by pressing the separator 11 against the inner wall using the inserted reform-pin 410. As such, the position of the reforming apparatus 400 is not fixed, and the reforming apparatus 400 may control (or adjust) the position of the reform-pin 410 according to the shape of the separator 11 such that interference does not occur. The reforming apparatus 400 may include at least one drive device (e.g., a motor) that precisely moves the reform-pin 410 in the horizontal direction (X direction) and/or the longitudinal direction (Y direction). For example, the reforming apparatus 400 may be, without limitation, a Cartesian robot or an articulated robot.

The reforming system 1000 may further include other components or configurations. For example, the reforming system 1000 may further include an artificial intelligence (AI) server (not shown) for analyzing the captured image to recognize (or extract) the insertion region. Furthermore, some of the components of the reforming system 1000 may be integrated. For example, the controller 300 may be integrated with the reforming apparatus 400. Alternatively, the imaging device 200 may be integrated with the controller 300. Alternatively, the imaging device 200, the controller 300, and the reforming apparatus 400 may be integrated into a single device.

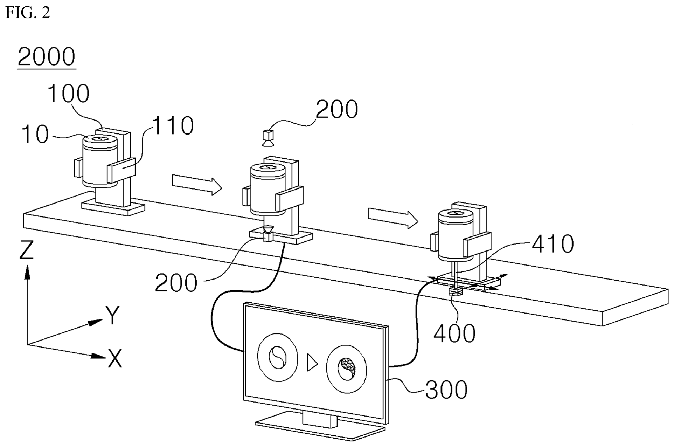

FIG. 2 is a diagram illustrating a reforming system for an electrode assembly according to another embodiment of the present disclosure.

Referring to FIG. 2, the reforming system 2000 for an electrode assembly according to another embodiment of the present disclosure may include a transport apparatus 100, an imaging device 200, a controller 300, and a reforming apparatus 400.

The reforming system 2000 is similar to the reforming system 1000 of FIG. 1. However, in the reforming system 2000, the position of the reforming apparatus 400 including the reform-pin 410 is fixed, and the transport apparatus 100 gripping the electrode assembly 10 via the gripper 110 may be moved in a horizontal direction (X direction) and a longitudinal direction (Y direction) based on the insertion position determined (or inferred) by the controller 300 (e.g., a position where interference between the reform-pin 410 and the separator 11 does not occur). The transport apparatus 100 may include at least one drive device (e.g., a motor) that precisely moves the electrode assembly 10 in the horizontal direction (X direction) and/or the longitudinal direction (Y direction). The transport apparatus 100 may be, without limitation, a Cartesian robot.

Except for the differences described above, the reforming system 2000 operates identically or similarly to the reforming system 1000 of FIG. 1. Accordingly, detailed descriptions of other components identical or similar to those in FIG. 1 will be omitted.

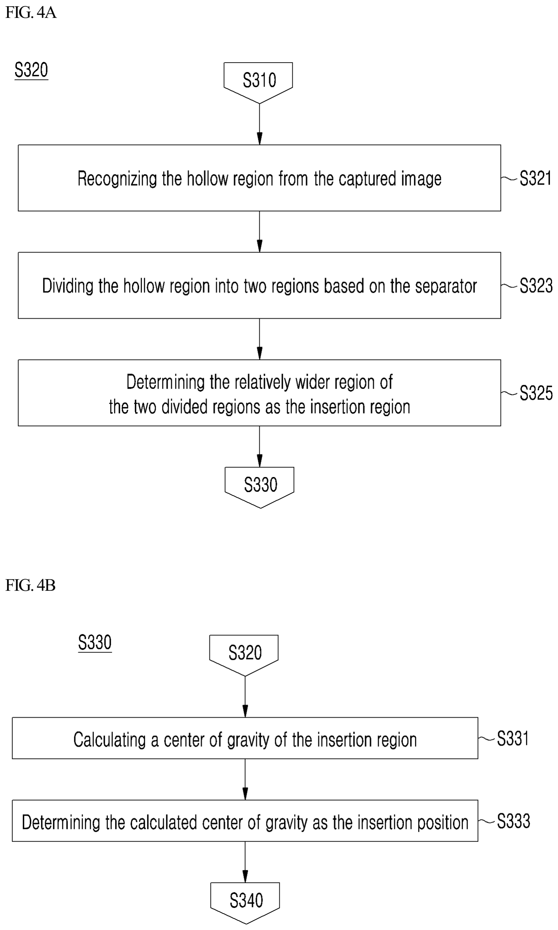

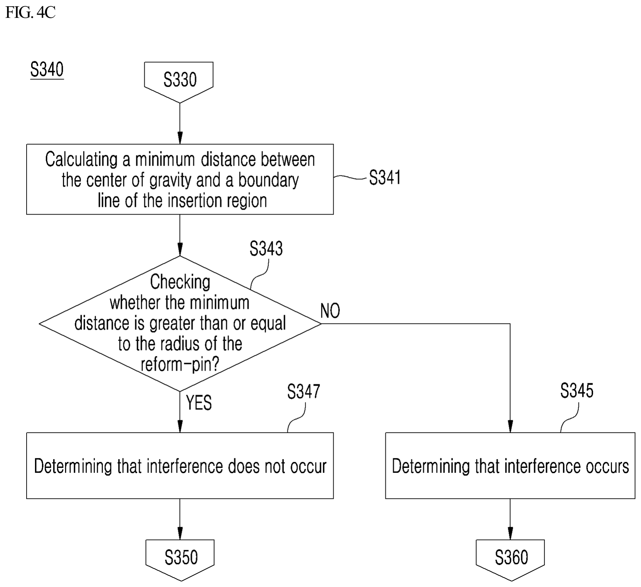

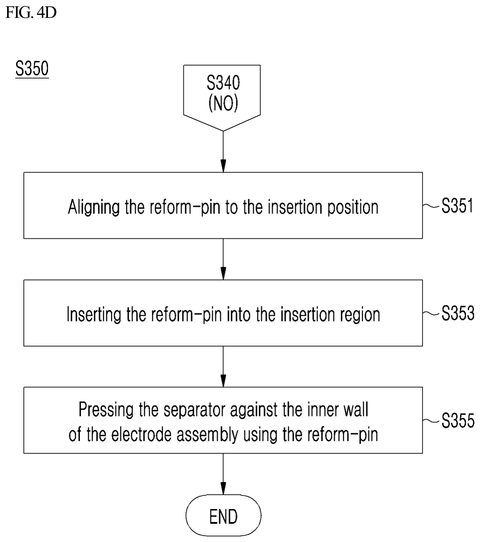

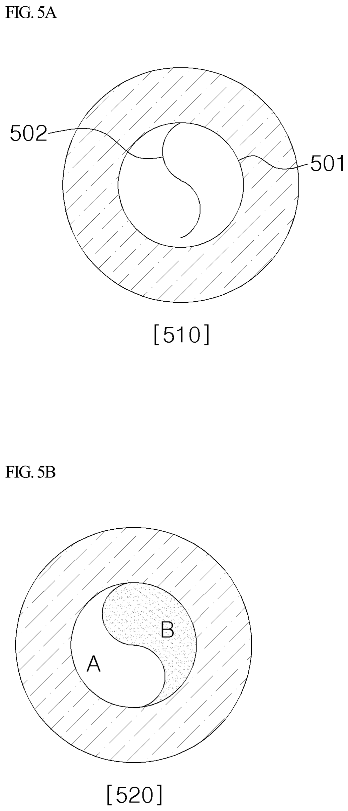

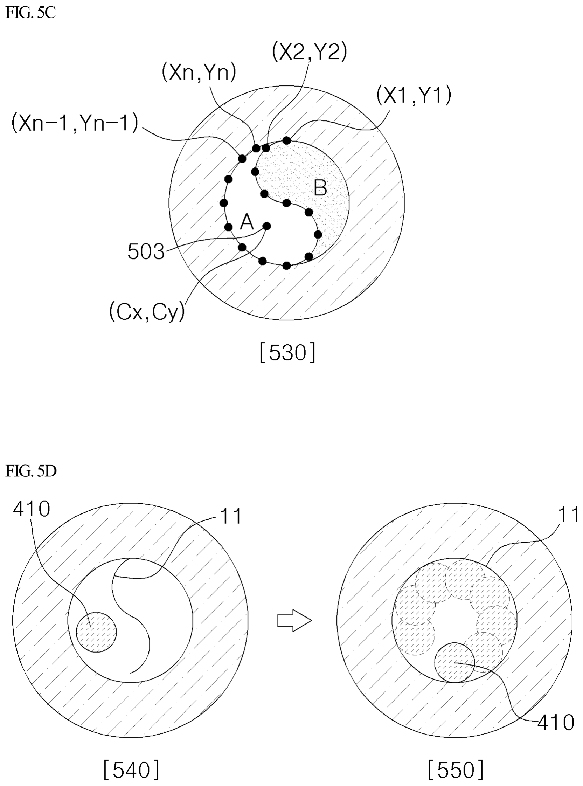

FIG. 3 is a flowchart illustrating a method for operating the reforming system according to some non-limiting embodiments of the present disclosure; FIG. 4A is a flowchart illustrating in more detail the operation of recognizing the insertion region of FIG. 3; FIG. 4B is a flowchart illustrating in more detail the operation of extracting the insertion position of FIG. 3; FIG. 4C is a flowchart illustrating in more detail the operation of determining whether interference occurs between the reform-pin and the separator of FIG. 3; FIG. 4D is a flowchart illustrating in more detail the operation of performing the reforming of the separator of FIG. 3; FIG. 5A is a diagram illustrating an image captured of a bottom surface of the electrode assembly according to some non-limiting embodiments of the present disclosure; FIG. 5B is a diagram illustrating a method for determining the insertion region according to some non-limiting embodiments of the present disclosure; FIG. 5C is a diagram illustrating a method for determining the insertion position according to some non-limiting embodiments of the present disclosure; and FIG. 5D is a diagram illustrating a method for reforming the separator using the reform-pin according to some non-limiting embodiments of the present disclosure.

It is noted that for the detailed description below it should be understood that the manufacturing operations up to and including the winding process for a cylindrical secondary battery have already been performed. Hence, unless otherwise specified, it is to be understood that the manufacturing steps up to and including the winding process for forming the cylindrical secondary battery have been completed prior to the following detailed description.

Also, as used herein, the term "step" is not limited to a single or indivisible action. Unless otherwise specified, a "step" may encompass a task, process, or procedure that includes one or more constituent actions, operations, sub-steps, or phases, which may be carried out in sequence, in parallel, or in any suitable combination.

Similarly, the term "operation," as used herein, is not restricted to a singular, standalone action. Rather, an "operation" may refer to any activity, process, or function that may include multiple sub-operations, actions, or stages, whether performed sequentially, concurrently, or in a combination thereof.

Referring to FIGS. 3 to 5D, the method for operating the reforming system according to some non-limiting embodiments (hereinafter, referred to as the reforming method) may include an operation (S310) of capturing an image of a region of the electrode assembly (10) in which a portion of the separator (11) is spaced apart from the inner wall. For example, when the electrode assembly 10 is moved to an imaging position by the transport apparatus 100, the reforming system 1000, 2000 (e.g., via the imaging device 200) may capture an image of a region of the electrode assembly 10 (e.g., the bottom surface into which the reform-pin 410 of the reforming apparatus 400 is inserted). According to some embodiments, the reforming system 1000, 2000 (e.g., via the imaging device 200) may further capture an image of the top surface of the electrode assembly 10.

According to some non-limiting embodiments, the reforming method may include an operation (S320) of recognizing an insertion region for the reform-pin to be inserted from the captured image. For example, the reforming system 1000, 2000 (e.g., the controller 300) may receive the captured image from the imaging device 200 and analyze the received image to recognize the insertion region. Here, referring to FIG. 4A, the operation of recognizing the insertion region (step S320) may include: an operation (S321) of recognizing the hollow region from the captured image; an operation (S323) of dividing the hollow region into two regions based on the separator; and an operation (S325) of determining the relatively wider region of the two divided regions as the insertion region. For example, the controller 300 of the reforming system 1000, 2000 may recognize the hollow region from the captured image, divide the hollow region into two regions based on the separator, and determine the relatively wider region of the two divided regions as the insertion region. Specifically, as illustrated in FIG. 5A, the controller 300 may extract the hollow region 501 from the image captured of the bottom surface of the electrode assembly 10. Specifically, the controller 300 may recognize the hollow region 501 using image processing technology or region segmentation technology employing an artificial neural network (e.g., deep learning). The image processing technology may include edge recognition technology based on brightness difference, region recognition technology through pattern matching, etc. The edge recognition technology based on brightness difference may divide the image into a plurality of regions, check the brightness of each divided region, and recognize, as the hollow region 501, those regions having a brightness greater than or equal to a reference value (e.g., a value greater than the brightness of regions among the plurality of regions that do not include the edge of the hollow region 501). For example, the edge recognition technology based on brightness difference may also recognize the edge of the hollow region 501 by making the size of the plurality of divided regions very small. The region recognition technology through pattern matching may recognize, from the image, a region having a specified pattern (e.g., a pattern similar to the region to be recognized). The method used for recognizing the insertion region may be determined in consideration of accuracy and process time (tact time). As illustrated in FIG. 5B, the controller 300 may extract a boundary line 502 corresponding to the separator 11 within the hollow region 501, divide the hollow region into two regions (A, B) based on the extracted boundary line 502, and determine the relatively wider region "A" of the two regions (A, B) as the insertion region. When the two regions (A, B) have the same area, the controller 300 may randomly select one of the regions and determine the selected region as the insertion region.

According to some non-limiting embodiments, the reforming method may include an operation (S330) of extracting an insertion position (or coordinates) for the reform-pin to be inserted from the insertion region. For example, the reforming system 1000, 2000 (e.g., the controller 300) may extract (or determine) the insertion position, into which the reform-pin 410 of the reforming apparatus 400 is to be inserted, from the insertion region. Here, referring to FIG. 4B, the operation of extracting the insertion position (step S330) may include an operation (S331) of calculating (or extracting) a center of gravity of the insertion region, and an operation (S333) of determining the calculated center of gravity as the insertion position. For example, as illustrated in FIG. 5C, the controller 300 may calculate (or extract) the center of gravity 503 of the region "A" determined as the insertion region, and determine the calculated (or extracted) center of gravity 503 as the insertion position. The controller 300 may calculate the coordinates of the center of gravity 503 of the region "A" using Equations 1, 2, and 3 below. That is, the coordinates of the center of gravity 503 of the region "A" may be calculated based on the area of the region "A" and the coordinates of a plurality (e.g., "n") of points located on the boundary line of the region "A".

$$\text{Area(A) of region "A"} = \frac{1}{2} \sum_{i=0}^{N-1} (x_i y_{i+1} - x_{i+1} y_i) \quad ... <\text{Equation 1}>$$

$$\text{X coordinate (Cx) of center of gravity} = \frac{1}{6A} \sum_{i=0}^{N-1} (x_i + x_{i+1})(x_i y_{i+1} - x_{i+1} y_i) \quad ... <\text{Equation 2}>$$

$$\text{Y coordinate (Cy) of center of gravity} = \frac{1}{6A} \sum_{i=0}^{N-1} (y_i + y_{i+1})(x_i y_{i+1} - x_{i+1} y_i) \quad ... <\text{Equation 3}>$$

According to some non-limiting embodiments, the reforming method may include an operation (S340) of checking whether interference occurs between the reform-pin and the separator. For example, the reforming system 1000, 2000 (e.g., the controller 300) may check whether interference occurs between the reform-pin and the separator when inserting the reform-pin into the insertion region at the insertion position, based on the insertion position (or center of gravity) and the specification of the reform-pin (e.g., the radius of the reform-pin). Here, referring to FIG. 4C, the operation of checking whether interference occurs between the reform-pin and the separator (operation S340) may include: an operation (S341) of calculating a minimum distance between the center of gravity and the boundary line of the insertion region; an operation (S343) of checking whether the minimum distance is greater than or equal to the radius of the reform-pin; an operation (S345) of determining that interference occurs when the minimum distance is not greater than or equal to the radius of the reform-pin; and an operation (S347) of determining that interference does not occur when the minimum distance is greater than or equal to the radius of the reform-pin. For example, the controller 300 may calculate distances between the center of gravity and a plurality (e.g., "n") of points located on the boundary line of the region "A", and determine whether interference occurs by comparing the minimum distance among the calculated distances with the radius of the reform-pin. Specifically, the controller 300 may calculate the minimum distance between the center of gravity 503 and the boundary line of the insertion region, check whether the calculated minimum distance is greater than or equal to the radius of the reform-pin 410, determine that interference will not occur when the calculated minimum distance is greater than or equal to the radius of the reform-pin 410, and determine that interference will occur when the calculated minimum distance is less than the radius of the reform-pin 410.

According to some embodiments, a margin may be set to ensure stability for the determination of whether interference occurs between the reform-pin and the separator. That is, operation S343 may be modified to be an operation of checking whether the minimum distance is greater than or equal to the sum of the radius of the reform-pin and a specified margin (e.g., without limitation, "0.1" mm (millimeter)). For example, the controller 300 may calculate the minimum distance between the center of gravity 503 and the boundary line of the insertion region, check whether the calculated minimum distance is greater than or equal to a distance obtained by adding a specified margin to the radius of the reform-pin 410, determine that interference will not occur when the calculated minimum distance is greater than or equal to the distance obtained by adding the margin to the radius of the reform-pin 410, and determine that interference will occur when the calculated minimum distance is less than the distance obtained by adding the margin to the radius of the reform-pin 410. In such a case, since a gap of at least the margin exists between the separator and the refonn-pin, the possibility of interference occurrence can be further reduced. In the foregoing description it is described that determining whether interference occurs between the separator and the reform-pin by comparing the minimum distance with the radius of the reform-pin, based on that the refonn-pin has a cylindrical shape and a circular cross-sectional area. However, this is merely a specific embodiment of the present disclosure and should not be construed as limiting the embodiment. For example, in some embodiments, the reform-pin may be formed such that a pressing portion, which presses the separator 11 against the inner wall of the electrode assembly 10, has a cylindrical shape with a circular cross-sectional area, and an end portion thereof is formed in a conical shape.

When it is determined as a result of the check in operation S340 that interference between the reform-pin and the separator does not occur (S3470, then the reforming method may proceed to an operation (S350) of performing the reforming of the separator. For example, as illustrated in views 540 and 550 of FIG. 5D, the reforming system 1000, 2000 (e.g., the reforming apparatus 400) may insert the refonn-pin 410 into the hollow of the electrode assembly and perform the reforming of the separator 11 using the refonn-pin 410 (e.g., without limitation, by rotating the reform-pin 410 clockwise (or counterclockwise) such that the separator 11 is pressed against the inner wall of the electrode assembly). Here, referring to FIG. 4D, the operation of performing the reforming of the separator (operation S350) may include an operation (S351) of aligning the reform-pin to the insertion position, an operation (S353) of inserting the reform-pin into the insertion region, and an operation (S355) of pressing the separator against the inner wall of the electrode assembly using the reform-pin. For example, when the controller 300 of the reforming system 1000 of FIG. 1 determines that interference will not occur, it transmits the insertion position (e.g., coordinates) to the reforming apparatus 400. The reforming apparatus 400 aligns (or adjusts) the position of the reform-pin 410 based on the insertion position (e.g., aligns such that the center (or center of gravity) of the cross-section of the reform-pin 410 coincides with the insertion position when the cross-section is circular), inserts the refonn-pin 410 into the insertion region, and performs the reforming of the separator 11 by pressing the separator 11 against the inner wall of the electrode assembly 10 using the inserted reform-pin 410. In another embodiment, when the controller 300 of the reforming system 2000 of FIG. 2 determines that interference will not occur, it transmits the insertion position (e.g., coordinates) to the transport apparatus 100, and the transport apparatus 100 may align (or adjust) the position of the electrode assembly 10 based on the insertion position. The transport apparatus 100 may transmit the completion of the position adjustment to the reforming apparatus 400 or the controller 300. When the completion of the position adjustment of the electrode assembly 10 is notified from the transport apparatus 100 or the controller 300, the reforming apparatus 400 may insert the refonn-pin 410 into the insertion region and perform the reforming of the separator 11 by pressing the separator 11 against the inner wall of the electrode assembly 10 using the inserted reform-pin 410.

On the other hand, when it is determined as a result of the check in operation S340 that interference between the reform-pin and the separator occurs, the reforming method may proceed to an operation (S360) of adjusting the position of the separator such that interference does not occur. For example, the reforming system 1000, 2000 (e.g., the transport apparatus 100) may move the electrode assembly to a designated location to proceed with a rework process for adjusting the position of the separator. At this time, an operator or a rework apparatus (not shown) may adjust the position of the separator such that interference does not occur. After the rework of the separator is completed, the reforming method may proceed back to operation S310 to re-perform the above-described procedures (or processes).

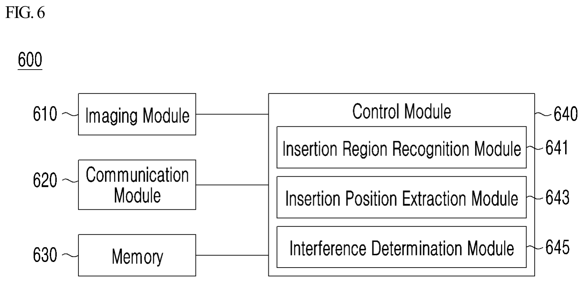

FIG. 6 is a block diagram illustrating a configuration of a controller according to some non-limiting embodiments of the present disclosure.

Referring to FIG. 6, the controller 600, according to some non-limiting embodiments may control the reforming process. The controller 600 may be the controller 300 of FIG. 1 or FIG. 2. The controller 600 according to some non-limiting embodiments may include an imaging module 610, a communication module 620, a memory 630, and a control module 640.

The imaging module 610 may be a camera that captures an image of a subject. The imaging module 610 may capture an image of a region of the electrode assembly 10, e.g., the region into which the reform-pin 410 of the reforming apparatus 400 of FIG. 1 and FIG. 2 is inserted. Since the imaging module 610 is similar to the imaging device 200 of FIG. 1 and FIG. 2, a detailed description thereof will be omitted. Like in FIG. 1 and FIG. 2, the imaging module 610 may not be included in the controller 600 but may be formed as a separate external device and connected to the controller 600 via wired communication or wireless communication.

The communication module 620 may communicate with external devices (e.g., the transport apparatus 100, the imaging device 200, the refonning apparatus 400 of FIG. 1 and FIG. 2) via wired communication or wireless communication. For example, when the imaging module 610 is an external device, the communication module 620 may receive the image capturing a region of the electrode assembly from the imaging device 200. In another embodiment, the communication module 620 may transmit information regarding the insertion position to the reforming apparatus 400 or the transport apparatus 100. In yet another embodiment, when the insertion region is recognized via an artificial intelligence server (not shown), the communication module 620 may transmit the image to the AI server and receive a region segmentation result from the AI server.

The memory 630 may be configured to store various programs for controlling the operation of the controller 600. For example, the memory 630 may store a program for recognizing the insertion region from the captured image (e.g., an image processing program, an artificial intelligence model), a program for extracting the insertion position, and a program for determining whether interference occurs. The memory 630 may store information necessary for controlling the operation of the controller 600. For example, the memory 630 may store the specification parameters of the reform-pin (e.g., diameter (or radius), cross-sectional shape, area, and the like). Additionally, the memory 630 may store the margin.

The control module 640 may control the operation of the components of the controller 600. For example, the control module 640 may control the imaging module 610 to capture an image of a region of the electrode assembly. In another embodiment, the control module 640 may control the communication module 620 to transmit the insertion position to the reforming apparatus or the transport apparatus.

According to some non-limiting embodiments, the control module 640 may include an insertion region recognition module 641 that recognizes the insertion region for the reform-pin from the captured image, an insertion position extraction module 643 that extracts the insertion position from the insertion region, and an interference determination module 645 that determines whether interference occurs between the reform-pin and the separator. The insertion region recognition module 641 may perform the operations described in operation S320 of FIG. 3 and FIG. 4A, the insertion position extraction module 643 may perform the operations described in operation S330 of FIG. 3 and FIG. 4B, and the interference determination module 645 may perform the operations described in operation S340 of FIG. 3 and FIG. 4C. Accordingly, detailed descriptions of the insertion region recognition module 641, the insertion position extraction module 643, and the interference determination module 645 will be omitted.

According to some non-limiting embodiments, the controller 600 may be a computing device such as a desktop personal computer (PC) or a laptop PC. In another embodiment, the controller 600 may be a server.

As described above, although the embodiments of the present disclosure have been described with reference to the limited drawings, it will be apparent to those skilled in the art that various modifications and alternations may be applied thereto based on the various non-limiting embodiments.

For example, adequate effects or results may be achieved even if the foregoing processes and methods are carried out in different order than those described above, and/or the above-described elements, such as systems, structures, devices, or circuits, are combined or coupled in different forms and modes than those described above, or substituted or switched with other components or equivalents.

In some non-limiting embodiments, when describing with reference to the flowchart, it is described that a plurality of operations are configured and the operations are sequentially executed in a designated order, but is the embodiments are not necessarily limited to the designated order.

That is, executing by changing or deleting at least one (e.g., at least some) of the operations described in the flowchart or adding at least one operation is applicable in some non-limiting embodiments, and executing one or more operations in parallel may also be applicable in some non-limiting embodiments. That is, it is not limited to the operations being necessarily operated in a time-series order, and should be comprised in various embodiments of the present disclosure.

The operations shown and described with regard to the flowcharts of FIGS. 3, 4a, 4b, 4c and 4d are provided for example purposes only. It will be appreciated that additional, fewer, different, and/or different order of operations may be used in non-limiting embodiments. In some non-limiting embodiments, an operation may be automatically performed in response to performance and/or completion of a prior operation. In some non-limiting embodiments, one or more of the operations may be performed (e.g., completely, partially, and/or the like) by a processor (e.g., a processor of at least one computing device of a system). In some non-limiting embodiments, one or more of the operations may be performed (e.g., completely, partially, and/or the like) by another system, another device, another group of systems, or another group of devices, separate from or comprising a system, a device, a group of systems, or a group of devices that performed a different operation or operations. Non-limiting embodiments described herein are not limited to any specific combination of hardware circuitry (e.g., a processor) and/or software. The term "configured to," as used herein, may refer to an arrangement of software, device(s), and/or hardware for performing and/or enabling one or more functions (e.g., actions, processes, steps of a process, and/or the like). For example, "a processor configured to" may refer to a processor that executes software instructions (e.g., program code) that cause the processor to perform one or more functions.

Although embodiments of the present disclosure have been described in detail for the purpose of illustration, it is to be understood that such detail is solely for that purpose and that this disclosure is not limited to the disclosed embodiments, but, on the contrary, is intended to cover modifications and equivalent arrangements that are within the spirit and scope of the present disclosure. For example, it is to be understood that the present disclosure contemplates that, to the extent possible, one or more features of any embodiment can be combined with one or more features of any other embodiment.

Therefore, other embodiments, and equivalents to claims are within the scope of the present disclosure. Furthermore, the embodiments may be combined to form additional embodiments.

The invention is also defined by the following aspects:

Aspect 1. A reforming system for an electrode assembly, the reforming system comprising:

a reforming apparatus comprising a reform-pin for reforming a separator of the electrode assembly;
an imaging device for capturing an image of a region of the electrode assembly; and
a controller for controlling the reforming apparatus to perform reforming the separator based on the image captured by the imaging device and a specification of the reform-pin.

Aspect 2. The reforming system according to aspect 1, wherein
the controller:

checks an insertion position of the reform-pin based on the image captured by the imaging device; determines whether interference between the separator and the reform-pin occurs based on the specification of the reform-pin; and
controls the reforming apparatus to perform the reforming of the separator when it is determined that the interference will not occur.

Aspect 3. The reforming system according to aspect 2, wherein the controller controls the reforming apparatus to perform a rework process for the separator when it is determined that the interference will occur.

Aspect 4. The reforming system according to aspects 2 or 3, wherein the controller:

recognizes an insertion region for the reform-pin from the image captured by the imaging device;
extracts the insertion position for the reform-pin from the recognized insertion region;
determines whether interference between the reform-pin and the separator occurs based on the insertion position and the specification of the reform-pin; and
controls the reforming apparatus to perform the reforming of the separator using the reform-pin when it is determined that the interference will not occur.

Aspect 5. The reforming system according to aspect 4, wherein the controller transmits the insertion position to the reforming apparatus, and
wherein the reforming apparatus:

aligns the reform-pin based on the insertion position;
inserts the reform-pin into the insertion region; and
performs reforming the separator by pressing the separator against an inner wall of the electrode assembly using the inserted reform-pin.

Aspect 6. The reforming system according to aspects 4 or 5, further comprising a transport apparatus that transports the electrode assembly,

wherein the controller transmits the insertion position to the transport apparatus,
wherein the transport apparatus aligns a position of the transport apparatus with the reform-pin based on the insertion position, and
wherein the reforming apparatus:

inserts the reform-pin into the insertion region; and
performs reforming the separator by pressing the separator against an inner wall of the electrode assembly using the inserted reform-pin.

Aspect 7. The reforming system according to any one of aspects 4 to 6, wherein the controller:

recognizes a hollow region of the electrode assembly from the image;
divides the hollow region into two regions based on the separator, and
determines a wider region of the two divided regions as the insertion region.

Aspect 8. The reforming system according to aspect 7, wherein the controller:

calculates a center of gravity of the insertion region; and
determines the calculated center of gravity as the insertion position.

Aspect 9. The reforming system according to aspect 8, wherein the controller:

calculates a minimum distance between the center of gravity and a boundary line of the insertion region;
checks whether the calculated minimum distance is greater than or equal to a radius of the reform-pin;
determines that the interference will not occur when the calculated minimum distance is greater than or equal to the radius of the reform-pin; and
determines that the interference will occur when the calculated minimum distance is less than the radius of the reform-pin.

Aspect 10. The reforming system according to aspect 8, wherein the controller:

calculates a minimum distance between the center of gravity and a boundary line of the insertion region;
checks whether the calculated minimum distance is greater than or equal to a distance obtained by adding a specified margin to a radius of the reform-pin;
determines that the interference will not occur when the calculated minimum distance is greater than or equal to the distance obtained by adding the margin to the radius of the reform-pin; and
determines that the interference will occur when the calculated minimum distance is less than the distance obtained by adding the margin to the radius of the reform-pin.

Aspect 11. A method for operating a reforming system for an electrode assembly, the method comprising:

capturing, via an imaging device of the reforming system, an image of a region of the electrode assembly; and
controlling, based on the captured image and specification of a reform-pin included in a reforming apparatus of the reforming system, the reforming apparatus to perform reforming a separator of the electrode assembly.

Aspect 12. The method according to aspect 11, wherein controlling the reforming apparatus to perform the reforming of the separator comprises:

checking an insertion position of the reform-pin based on the captured image;
determining whether interference between the separator and the reform-pin occurs based on the specification of the reform-pin; and
controlling the reforming apparatus to perform reforming the separator when it is determined that the interference will not occur.

Aspect 13. The method according to aspect 12, further comprising controlling the reforming apparatus to perform a rework process for the separator when it is determined that the interference will occur.

Aspect 14. The method according to aspects 12 or 13, wherein controlling the reforming apparatus comprises:

recognizing an insertion region for the reform-pin from the captured image;
extracting the insertion position for the reform-pin from the recognized insertion region;
determining whether interference between the reform-pin and the separator occurs based on the insertion position and the specification of the reform-pin; and
controlling the reforming apparatus to perform reforming the separator using the reform-pin when it is determined that the interference will not occur.

Aspect 15. The method according to aspect 14, wherein controlling the reforming apparatus to perform reforming the separator comprises:

a controller of the reforming system transmitting the insertion position to the reforming apparatus; and
the reforming apparatus, in response to receiving the insertion position from the controller:

aligning the reform-pin based on the insertion position;

inserting the refonn-pin into the insertion region; and

pressing the separator against an inner wall of the electrode assembly using the inserted reform-pin.

**Claims**

1. A reforming system for an electrode assembly, the reforming system comprising:

   a reforming apparatus comprising a reform-pin for reforming a separator of the electrode assembly;
   an imaging device for capturing an image of a region of the electrode assembly; and
   a controller for controlling the reforming apparatus to perform reforming the separator based on the image captured by the imaging device and a specification of the reform-pin.

2. The reforming system according to claim 1, wherein the controller:

   checks an insertion position of the reform-pin based on the image captured by the imaging device;
   determines whether interference between the separator and the reform-pin occurs based on the specification of the reform-pin; and
   controls the reforming apparatus to perform the reforming of the separator when it is determined that the interference will not occur.

3. The reforming system according to claim 2, wherein the controller controls the reforming apparatus to perform a rework process for the separator when it is determined that the interference will occur.

4. The reforming system according to claims 2 or 3, wherein the controller:

   recognizes an insertion region for the reform-pin from the image captured by the imaging device;
   extracts the insertion position for the reform-pin from the recognized insertion region;
   determines whether interference between the reform-pin and the separator occurs based on the insertion position and the specification of the reform-pin; and
   controls the reforming apparatus to perform the reforming of the separator using the reform-pin when it is determined that the interference will not occur.

5. The reforming system according to claim 4, wherein the controller transmits the insertion position to the reforming apparatus, and
   wherein the reforming apparatus:

   aligns the reform-pin based on the insertion position;
   inserts the reform-pin into the insertion region; and
   performs reforming the separator by pressing the separator against an inner wall of the electrode assembly using the inserted reform-pin.

6. The reforming system according to claims 4 or 5, further comprising a transport apparatus that transports the electrode assembly,

   wherein the controller transmits the insertion position to the transport apparatus,
   wherein the transport apparatus aligns a position of the transport apparatus with the reform-pin based on the insertion position, and
   wherein the reforming apparatus:

   inserts the reform-pin into the insertion region; and
   performs reforming the separator by pressing the separator against an inner wall of the electrode assembly using the inserted reform-pin.

7. The reforming system according to any one of claims 4 to 6, wherein the controller:

   recognizes a hollow region of the electrode assembly from the image;
   divides the hollow region into two regions based on the separator; and

determines a wider region of the two divided regions as the insertion region.

8. The reforming system according to claim 7, wherein the controller:

calculates a center of gravity of the insertion region; and
determines the calculated center of gravity as the insertion position.

9. The reforming system according to claim 8, wherein the controller:

calculates a minimum distance between the center of gravity and a boundary line of the insertion region;
checks whether the calculated minimum distance is greater than or equal to a radius of the reform-pin;
determines that the interference will not occur when the calculated minimum distance is greater than or equal to the radius of the reform-pin; and
determines that the interference will occur when the calculated minimum distance is less than the radius of the reform-pin.

10. The reforming system according to claim 8, wherein the controller:

calculates a minimum distance between the center of gravity and a boundary line of the insertion region;
checks whether the calculated minimum distance is greater than or equal to a distance obtained by adding a specified margin to a radius of the reform-pin;
determines that the interference will not occur when the calculated minimum distance is greater than or equal to the distance obtained by adding the margin to the radius of the reform-pin; and
determines that the interference will occur when the calculated minimum distance is less than the distance obtained by adding the margin to the radius of the reform-pin.

11. A method for operating a reforming system for an electrode assembly, the method comprising:

capturing, via an imaging device of the reforming system, an image of a region of the electrode assembly; and
controlling, based on the captured image and specification of a reform-pin included in a reforming apparatus of the reforming system, the reforming apparatus to perform reforming a separator of the electrode assembly.

12. The method according to claim 11, wherein controlling the reforming apparatus to perform the reforming of the separator comprises:

checking an insertion position of the reform-pin based on the captured image;
determining whether interference between the separator and the reform-pin occurs based on the specification of the reform-pin; and
controlling the reforming apparatus to perform reforming the separator when it is determined that the interference will not occur.

13. The method according to claim 12, further comprising controlling the reforming apparatus to perform a rework process for the separator when it is determined that the interference will occur.

14. The method according to claims 12 or 13, wherein controlling the reforming apparatus comprises:

recognizing an insertion region for the reform-pin from the captured image;
extracting the insertion position for the reform-pin from the recognized insertion region;
determining whether interference between the reform-pin and the separator occurs based on the insertion position and the specification of the reform-pin; and
controlling the reforming apparatus to perform reforming the separator using the reform-pin when it is determined that the interference will not occur.

15. The method according to claim 14, wherein controlling the reforming apparatus to perform reforming the separator comprises:

a controller of the reforming system transmitting the insertion position to the reforming apparatus; and
the reforming apparatus, in response to receiving the insertion position from the controller:

aligning the reform-pin based on the insertion position;
inserting the reform-pin into the insertion region; and
pressing the separator against an inner wall of the electrode assembly using the inserted reform-pin.

FIG. 1

FIG. 2

FIG. 3

```
                    ┌─────────┐
                    │  START  │
                    └────┬────┘
                         │              ◄──────────────────────┐
                         ▼                                      │
   ┌───────────────────────────────────────────┐               │
   │ Capturing an image of a region of the      │               │
   │ electrode assembly in which a portion       │ ~S310         │
   │ of the separator is spaced apart from       │               │
   │ the inner wall                              │               │
   └─────────────────┬─────────────────────────┘               │
                     ▼                                          │
   ┌───────────────────────────────────────────┐               │
   │ Recognizing, from the captured image,       │ ~S320         │
   │ an insertion region for the reform-pin      │               │
   │ to be inserted                              │               │
   └─────────────────┬─────────────────────────┘               │
                     ▼                                          │
   ┌───────────────────────────────────────────┐               │
   │ Extracting, from the insertion region,      │ ~S330         │
   │ an insertion position for the reform-pin    │               │
   │ to be inserted                              │               │
   └─────────────────┬─────────────────────────┘               │
                     ▼                        S340              │
              ◇─────────────────────────◇                      │
             ╱ Checking                   ╲    YES    ┌─────────┴──────────┐  S360
            ◇  whether interference occurs  ◇────────►│ Adjusting the      │
             ╲ between the reform-pin and  ╱          │ position of the    │
              ◇ the separator?           ◇            │ separator such     │
                  ╲─────────┬─────────╱               │ that interference  │
                            │ NO                       │ does not occur     │
                            ▼                          └────────────────────┘
   ┌───────────────────────────────────────────┐
   │ Performing the reforming of the separator  │ ~S350
   └─────────────────┬─────────────────────────┘
                     ▼
                ┌─────────┐
                │   END   │
                └─────────┘
```

FIG. 4A

S320

S310

Recognizing the hollow region from the captured image — S321

Dividing the hollow region into two regions based on the separator — S323

Determining the relatively wider region of
the two divided regions as the insertion region — S325

S330

FIG. 4B

S330

S320

Calculating a center of gravity of the insertion region — S331

Determining the calculated center of gravity as the insertion position — S333

S340

FIG. 4C

S340

S330

Calculating a minimum distance between the center of gravity and a boundary line of the insertion region — S341

S343

Checking whether the minimum distance is greater than or equal to the radius of the reform-pin?

NO

YES    S347                              S345

Determining that interference does not occur

Determining that interference occurs

S350                                      S360

FIG. 4D

S350

S340
(NO)

Aligning the reform-pin to the insertion position     ∼S351

Inserting the reform-pin into the insertion region     ∼S353

Pressing the separator against the inner wall
of the electrode assembly using the reform-pin     ∼S355

END

FIG. 5A

502

501

[510]

FIG. 5B

B

A

[520]

FIG. 5C

(Xn,Yn)

(X2,Y2)

(Xn-1,Yn-1)

(X1,Y1)

B

A

503

(Cx,Cy)

[530]

FIG. 5D

410

11

11

410

[540]

[550]

FIG. 6

<u>600</u>

610 ～ Imaging Module

620 ～ Communication Module

630 ～ Memory

Control Module ～ 640

Insertion Region Recognition Module ～ 641

Insertion Position Extraction Module ～ 643

Interference Determination Module ～ 645

Europäisches
Patentamt

European
Patent Office

Office européen
des brevets

# EUROPEAN SEARCH REPORT

**Application Number**

EP 25 21 5749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/136472 A1 (LG ENERGY SOLUTION LTD [KR]) 27 June 2024 (2024-06-27) * paragraph [0053]; claims 1-9; figures 2-5 * & EP 4 557 415 A1 (LG ENERGY SOLUTION LTD [KR]) 21 May 2025 (2025-05-21) ----- | 1-15 | INV. H01M10/04 H01M10/0587 |
| A | EP 4 270 570 A1 (LG ENERGY SOLUTION LTD [KR]) 1 November 2023 (2023-11-01) * paragraphs [0066], [0068]; claims 1-7; figures 1, 9-12 * ----- | 1-15 | |
| A | KR 2024 0097601 A (LG ENERGY SOLUTION LTD [KR]) 27 June 2024 (2024-06-27) * paragraphs [0040], [0050]; claims 1-11; figures 1-4 * ----- | 1-15 | |

| | TECHNICAL FIELDS SEARCHED (IPC) |
|---|---|
| | H01M |

The present search report has been drawn up for all claims

| Place of search | Date of completion of the search | Examiner |
|---|---|---|
| Munich | 18 March 2026 | Schmidtbauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 5749

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | | Publication date | Patent family member(s) | | Publication date |
|---|---|---|---|---|---|
| WO 2024136472 | A1 | 27-06-2024 | CN | 119343794 A | 21-01-2025 |
| | | | EP | 4557415 A1 | 21-05-2025 |
| | | | JP | 2025523150 A | 17-07-2025 |
| | | | US | 2025357523 A1 | 20-11-2025 |
| | | | WO | 2024136472 A1 | 27-06-2024 |
| EP 4270570 | A1 | 01-11-2023 | CN | 116868394 A | 10-10-2023 |
| | | | EP | 4270570 A1 | 01-11-2023 |
| | | | JP | 7666798 B2 | 22-04-2025 |
| | | | JP | 2024507449 A | 20-02-2024 |
| | | | KR | 20230066889 A | 16-05-2023 |
| | | | US | 2024136563 A1 | 25-04-2024 |
| | | | WO | 2023080440 A1 | 11-05-2023 |
| KR 20240097601 | A | 27-06-2024 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240161090